# EUROPEAN PATENT SPECIFICATION

(11) **EP 3 101 193 B1**
(45) Date of publication and mention of the grant of the patent: **26.12.2018**
(21) Application number: 16171136.1
(22) Date of filing: 24.05.2016
(51) Int. Cl.: E04B 7/02, E04B 7/24, E04C 3/00, E04C 3/11, E04C 3/17, E04B 7/06, F16B 5/07, E04B 1/24, E04B 1/26

(54) **TRUSSES FOR USE IN BUILDING CONSTRUCTION AND METHODS OF INSTALLING SAME**
TRÄGER ZUR VERWENDUNG IM GEBÄUDEBAU SOWIE VERFAHREN ZUR INSTALLATION DAVON
TREILLIS POUR UNE UTILISATION DANS LA CONSTRUCTION DE BÂTIMENTS ET PROCÉDÉS D'INSTALLATION ASSOCIÉS

(30) Priority: 02.06.2015 AU 2015902094
(43) Date of publication of application: 07.12.2016
(60) Divisional application: 18181166.2
(73) Proprietor: Illinois Tool Works Inc., Glenview, IL 60025 (US)
(72) Inventor: KENNELLY, Bernard Joseph, North Balgowlah, New South Wales 2093 (AU); PAULL, Mike, Glenview, IL Illinois 60025-4075 (US)
(74) Representative: Gevers & Orès

(56) References cited:
- EP-A1- 2 113 616
- EP-A2- 0 866 186
- WO-A1-2014/186906
- BE-A3- 1 014 438
- DE-A1- 2 634 179
- DE-C- 696 108
- FR-A- 1 233 563
- JP-A- S6 458 745
- JP-A- H04 254 645
- JP-B2- 2 847 382
- US-A- 5 888 621
- US-A1- 2015 041 252

## Description

The present invention relates to trusses in use for building construction, particularly in the construction of roofs.

In some types of building construction it is conventional practice to construct the roof using trusses prefabricated in a factory situation and transported to site for erection onto wall frames or other wall structure of the building. Although the main structure of a roof will normally be formed by a series of trusses arranged in spaced parallel relation, in the construction of a complex roof such as one having hips and/or gables further trusses are installed to a face of one or more of other trusses within the structure after installation so as to extend transversely from the face of that truss, usually at right angles thereto. Typically those further trusses will also be of prefabricated construction whereby substantially the entire basic roof structure can be assembled on site from prefabricated components. Although construction of a roof from prefabricated trusses removes much of the skill which would otherwise be needed to construct a roof and, of course, enables relatively quick construction, nevertheless installing and fastening supplementary trusses within the main structure by installing to the face of a main truss for instance, can add a degree of complexity. The supplementary trusses require separate handling and need to be accurately located relative to the main truss and then attached using suitable brackets. This has to be done by people working at the height of the roof of course, and does involve a degree of skill. The environment in which the installers are working at roof level is not a stable environment and required "safe work practices" are not always adhered to. Many of those working on site can be at risk until a main truss and its supplementary trusses are installed, temporarily braced, and made stable. Additionally, issues sometimes issues arise through absence of adequate documentation for identification and accurate placement of the supplementary trusses.

The present invention seeks to ameliorate these difficulties.

In the installation of the trusses they need to be anchored to the underlying wall structure of the building, typically by fastening the bottom chord of a truss to the top plate of an underlying wall frame and which itself is usually of prefabricated form. A typical attachment consists of brackets fastened by nails to the top plate and bottom chord, itself quite a time consuming exercise carried out at roof level. The present invention according to a preferred embodiment provides an attachment system which provides quicker fastening between the truss and top plate or other underlying structure during installation. Prior art includes at least US-A1-2015/041252.

EP 2 113 616 A1 discloses a truss assembly with the features of the preamble of claim 1.

According to the invention there is provided a truss assembly as recited in the independent claim 1.

According to a preferred embodiment of the invention, this truss assembly includes the main truss which forms a component and the or each supplementary truss which forms a second component of the truss assembly, said components being fastened to each other and to an underlying top plate by a plurality of fastenings, wherein each fastening comprises, a first part for attachment to one of the components and a second part for attachment to the other of the component, the first and second parts each being of plate-like form, the first part providing a multiplicity of locking projections and the second part providing a multiplicity of apertures arranged in a configuration equivalent to that of the locking projections of the first part such that when the two parts are applied together in face-to-face relation the locking projections of the first part can extend through the apertures of the second part and lock to the second part to thereby lock the two parts together against separation of the two parts, and wherein in each of the positions where a bottom chord of the main truss and the or each supplementary truss adjoins the top plate, one part of the fastening is affixed to the bottom chord, with the other part of the fastening being fixed at that position to the top plate, the respective parts of the fastenings being applied prior to installation of the truss assembly.

Further embodiments will now be described by way of example only with reference to the accompanying drawings in which:
Figure 1 shows in exploded form components of a truss assembly;
Figure 2 shows the truss assembly in its assembled configuration with supplementary trusses hingedly attached to a main truss and the supplementary trusses in a folded configuration against the main truss;
Figure 3 shows schematically a typical roof structure as could be formed from truss assemblies;
Figure 4 is a side view showing respective parts of a quick-action fastening, the parts being shown prior to coupling of the two parts;
Figure 5 is a perspective view equivalent to Figure 4;
Figure 6 is a side view similar to Figure 4 but showing the two parts in their coupled relation;
Figure 7 is a perspective view corresponding to Figure 6;
Figure 8 is a view corresponding to Figure 1 but showing a truss assembly according to the invention, in which rafter extensions are hinged to the supplementary trusses;
Figures 9 and 9A show highly schematically successive stages in folding out the rafter extensions of a truss assembly according to the invention to brace an adjacent main truss during installation thereof;
Figure 10 shows highly schematically a braced truss assembly for use in forming a hip end of a roof;
Figure 11 shows in more detail the truss assembly of Figure 10 but in a folded configuration for transportation and craning;
Figure 11A shows a detail of Figure 11;
Figure 12 is a view similar to Figure 11 but showing the assembly in its erected configuration;
Figure 13 is a highly schematic view of a truss assembly for use in forming a gable end of a roof;
Figure 14 shows in more detail the assembly of Figure 13 but in a folded configuration for transportation and craning;
Figure 14A shows a detail of Figure 14; and
Figure 15 is a view similar to Figure 14 but showing the assembly in its erected configuration.

In an embodiment, prefabricated trusses which, in the assembled roof structure are to be attached to and extend transversely from another prefabricated truss, usually one of the larger trusses and which will be referred to for simplicity as a "main" truss are assembled to the main truss by hinges as part of the pre-fabrication process. The hinges provide a secure connection between the main truss and the other trusses, referred to for simplicity as "supplementary trusses", and permit the supplementary trusses to be swung from a position in which a face of the supplementary truss lies adjacent a face of the main truss for transportation to site on the bed of a truck and lifting into position on site, typically by means of a crane. When the main truss is in position on the top plate or other underlying structure, the supplementary trusses can then be swung outwardly from the face of the main truss into its required orientation transversely to the main truss. Depending on the design of the roof structure, that orientation can be at 90° to the main truss or at an acute angle.

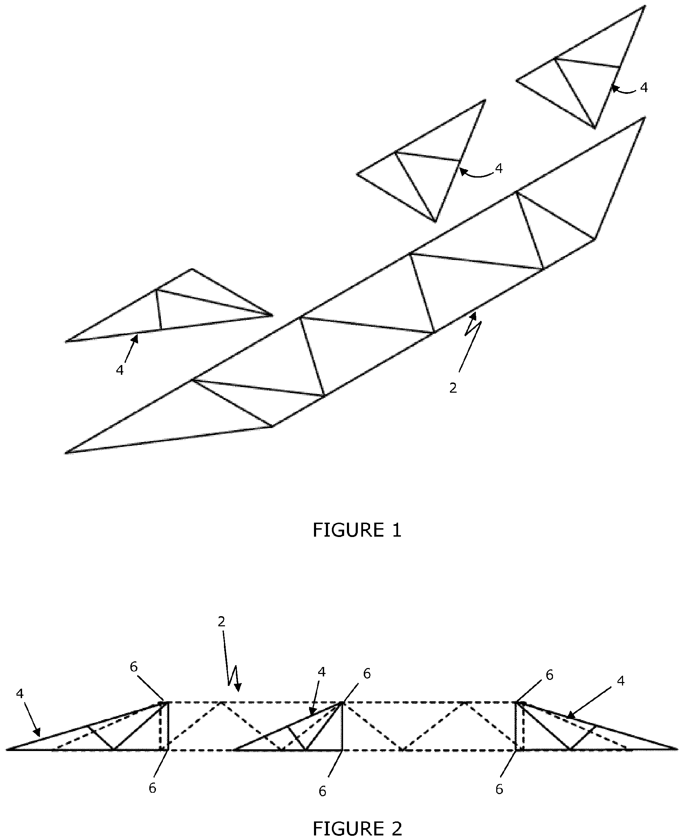

Figure 1 shows by way of example a main truss 2 and a set of three supplementary trusses 4 prior to assembly together by hinges as discussed above. In the assembled roof, the supplementary trusses are intended to form a hip end of the roof. Figure 2 shows the supplementary trusses 4 attached to the main truss 2 by the hinges and folded to lie with their faces against the adjacent face of the main truss for transportation to site and for lifting into position. In the particular design shown, each supplementary truss 4 is hinged to the top chord and bottom chord of the main truss 2 at hinge points 6, the hinge axis of each supplementary truss 4 being vertical considered in relation to the main truss when lying in a vertical plane in its installed condition. Although in the embodiment shown the supplementary trusses are hinged to the top and bottom chords of the main truss by respective upper and lower hinges, other placements of the hinges would be possible with different designs of main and supplementary trusses. However it is envisaged that in most circumstances there would be at least an upper and lower hinge for each supplementary truss although it is conceivable that a single longer hinge might suffice in some circumstances. The hinges are fixed to the trusses by any suitable means such as screwing, nailing, or gluing, or by nail-plates. The primary function of the hinged connection between the supplementary truss and main truss is to enable the supplementary truss to be swung out from its folded condition assumed during transportation and lifting and, as such, the hinges only need to have capacities to withstand the handling and installation loads. Although in principle they could also be designed to withstand in-service loading in the completed roof structure, in practice it is envisaged supplementary fixings would be subsequently installed to withstand the in-service loading, these supplementary fixings being fitted later in the installation process when the majority of the roof structure is in place and braced to provide a stable and safe working environment.

In the example shown, each of the supplementary trusses is of a length which enables the set of supplementary trusses to be folded flat against the face of the main truss and which is desirable as it enables a series of such truss assemblies to be stacked flat for transportation. Nevertheless the overall concept would still be applicable for use with somewhat longer supplementary trusses in which, in their folded condition for transportation, an outer end of one supplementary truss might overlap the inner end of the adjacent supplementary truss whereby in its folded state it is inclined to the adjacent face of the main truss rather than lying flat against it.

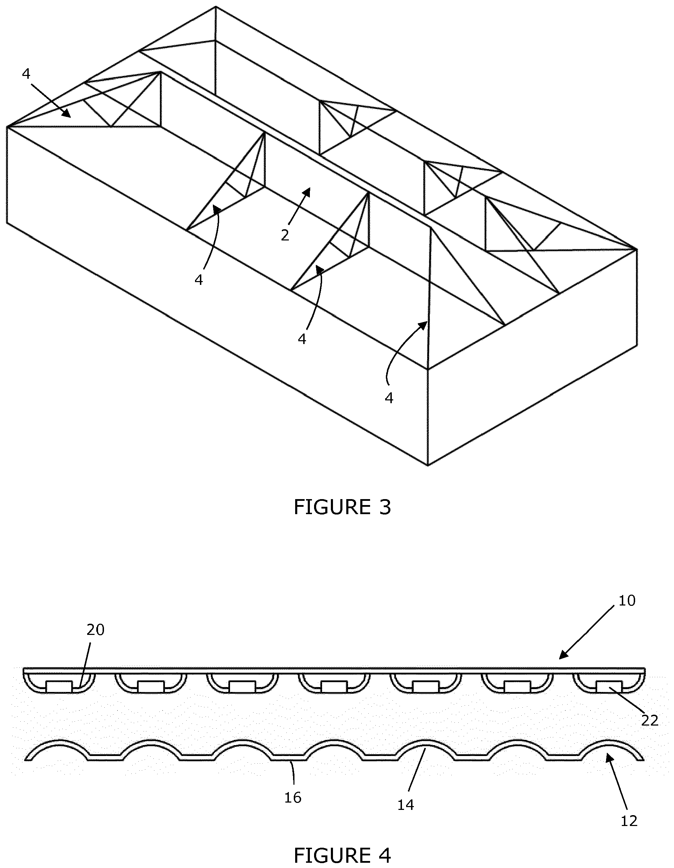

As the hinged assembly of the supplementary trusses to the main truss takes place as part of the pre-fabrication process in the factory, the supplementary trusses will be accurately positioned relative to the main truss. All that is required is for the supplementary truss to be swung about the vertical hinge axis into its required orientation transverse to the main truss and fastened at its outer end to underlying wall structure, usually the top plate of the underlying wall frame. The example which has been given is of a hip formed with three supplementary trusses hinged to the main truss. It will readily be understood that there may be more than or less than three supplementary trusses in such a structure and the general principles described herein are applicable to a wide range of other roof structures such as gables or valleys defined by trusses in mutually transverse orientations. Figure 3 shows schematically a hip structure formed by a main truss 2 and four supplementary trusses 4.

Although as just described the hinged assembly of the supplementary trusses to the main truss is undertaken as part of the pre-fabrication in a factory situation, nevertheless many of the advantages provided by the invention can be achieved with hinges pre-installed to the main truss during fabrication with the connection to the supplementary trusses being completed on-site prior to lifting into position with the supplementary trusses being folded against the face of the main truss during lifting. This enables the main truss and supplementary trusses to be transported to sites separately and may be necessary in circumstances where the length of the supplementary trusses causes difficulties in transportation when in their folded position against the main truss.

As briefly discussed at the outset, following erection into position roof trusses are usually fixed to the underlying top plate or other structure by brackets nailed to the top plate and lower chord of the truss, typically using a nail gun for this purpose. A quick-connect two-part fastening may be pre-installed to the truss and top plate during the pre-fabrication of the truss and wall frame, which does not require working with a nail gun at height to make the connection. A preferred embodiment of the two-part fastening will now be described in detail.

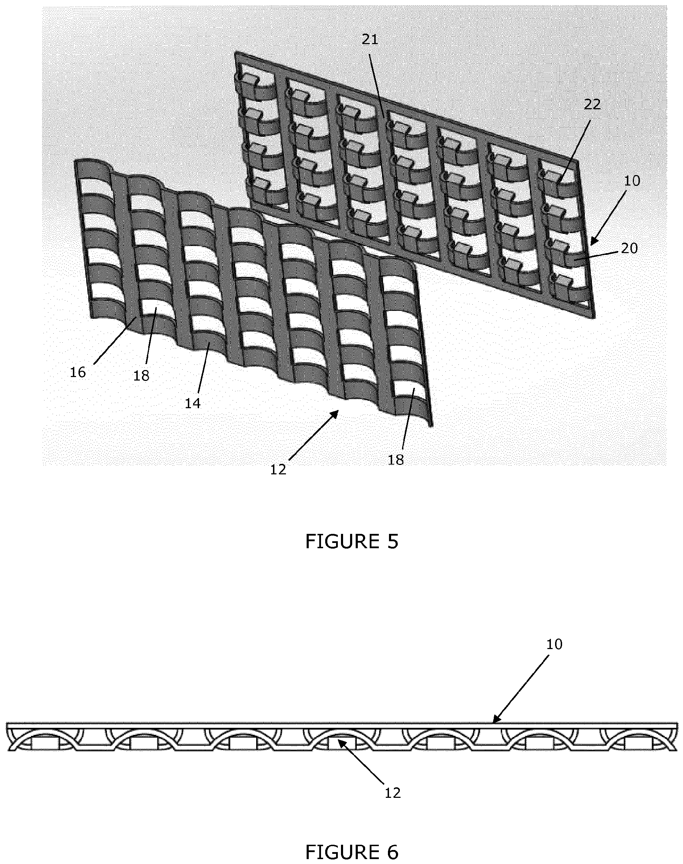

With reference to Figures 4 to 7 the quick-connect fastening comprises male and female parts 10, 12 each of plate-like form, and each preferably being pressed out of metal sheet. The female part 12 is shaped to form a series of parallel crests 14 of arcuate form extending across the width of the plate, with valleys 16 in the form of flat lands between adjacent crests. Each crest is apertured along its length with a row of parallel slots 18 which are clearly shown in Figure 5. The male part 10 is profiled in a manner generally corresponding to that of the female part except that each of the crests is defined by a row of generally parallel ribs 20 each of a width and peripheral configuration which enables the rib 20 to fit within one of the slots 18 when the face of one of the two parts is applied against the face of the other part. Flat lands 21 are formed between each row of ribs 20. The spacing between adjacent ribs 20 in each row of ribs corresponds to that between adjacent slots 18 in each row of slots, and the rows of ribs and slots are at the same spacing. A locking lug or tang 22 projects outwardly from the opposite edges of each rib 20, with the two tangs of each rib being in a divergent configuration. The configuration is such that when a rib 20 is pressed into a corresponding slot 18 in the female part, its two tangs 22 will deflect resiliently inwardly to enable the rib to enter the slot and when the two tangs have passed through the slot the two tangs will move outwardly under their inherent resilience to their original divergent configuration to engage behind the outer surface of the female plate in the zone of the slots in order to provide a positive locking engagement (see Figure 6).

Although in the embodiment described, a locking tang extends from each of two opposite sides of each rib and which is the preferred arrangement, in principle locking could be achieved by just a single tang on each rib. In a further alternative, resiliently deflectable locking tangs could be formed on one or both sides of each slot with the tangs then being deflected by passage of the ribs through the slots on engagement of the two parts and then returning to their original configuration to positively lock the ribs within the slots against withdrawal.

In the example given of an attachment of the bottom chord of a truss to the top plate of a wall frame, one of the two parts, the female part for example, is fixed to the top plate with its slotted crests facing upwardly and the other part, in this case therefore the male part, is fixed to the underside of the bottom chord of the truss with its locking ribs facing downwardly. Fixing can occur by any suitable means such as screwing, nailing or gluing, or by nail-plates. Nailing or other fixing can occur through holes (the holes are not shown) formed in the flat lands 16, 21 of both plates and which will be in direct contact with the top plate and bottom chord. It will be understood that if the truss with its male plate 10 is pushed down onto the female plate 12 on the top plate to engage the locking ribs 20 within the slots 18, a positive locked connection between the two can be achieved very quickly. The connection is very strong and is not capable of release by application of reversed forces. In a typical situation where the wall frames and trusses and other components are prefabricated in a factory situation, the two parts of each fastening are installed during pre-fabrication to facilitate easy and accurate location of the truss relative to the wall frame during erection with coupling of the truss to the top plate being achieved very quickly by engagement of its coupling part with the corresponding coupling part already fixed to the top plate.

It will be understood that in this situation if the truss is perfectly aligned with the top plate, all of the locking ribs in the male part will engage and lock with the corresponding slots in the female part. Although in principle perfect alignment could arise (or could be achieved by manoeuvring the truss during installation) given that both parts of the fastening are installed in a factory situation which would permit high accuracy in placement, in practice this may not be possible in the erected structure for a variety of reasons, for example some inaccuracy in the laying of a concrete slab or other footings, inaccuracy in setting of the wall frames and so forth. The design of the two-part fastening provides a multiplicity of fixing points in a fixing matrix formed by parallel rows of locking ribs and slots. The sizing of the two parts in conjunction with the number of fixing points formed within the matrix can be determined so that even with a maximum expected degree of longitudinal and/or lateral misalignment between the two fastening parts likely to arise when the truss is lowered onto the top plate, a sufficient number of locking ribs will engage within the slots to provide the required secure connection between the truss and top plate. In typical Australian building conditions, the misalignment is likely to be no more than 20mm whereby the two plates of the fastening can be designed to account for the eventuality.

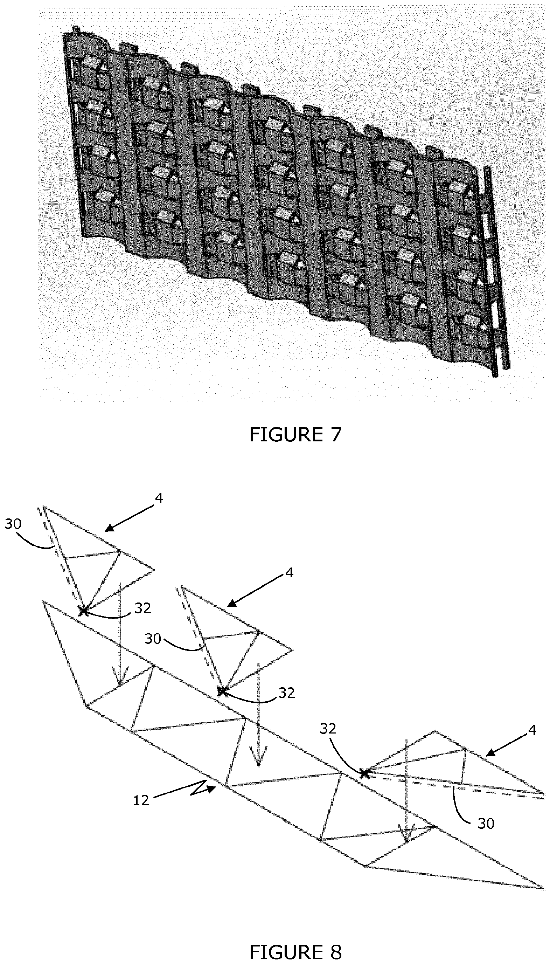

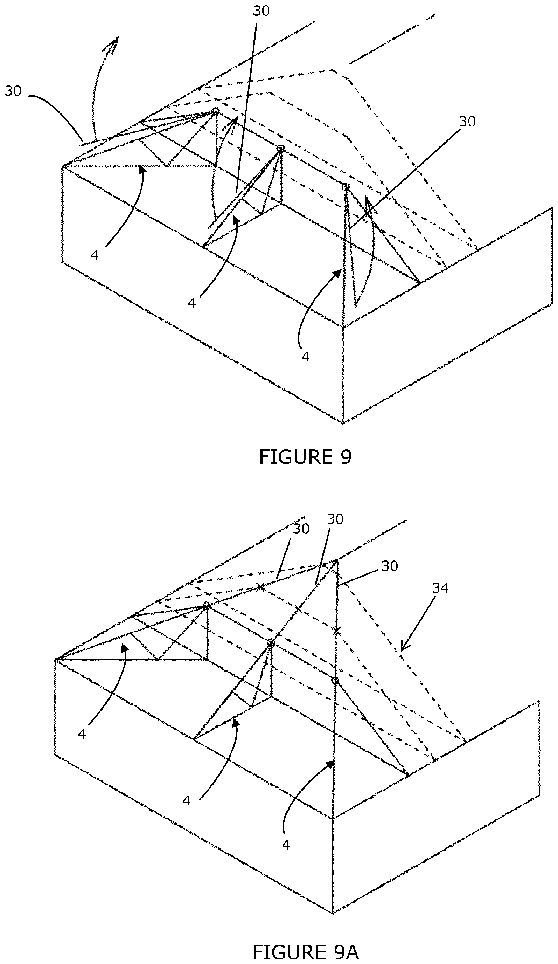

To facilitate installation of the roof structure, rafter extensions are hinged to the top chords of the supplementary trusses, preferably at the inner ends thereof. During transportation and erection of the truss assembly as previously described, the extensions lie along the top chords of the supplementary trusses. After erection of the main truss and stabilisation by folding out of the supplementary trusses, the rafter extensions are hinged out to extend beyond the main truss into the zone occupied (or to be occupied) by an adjacent main truss of the structure whereby the rafter extensions when fitted to the top chord of the adjacent truss will serve to stabilise that truss during its installation. The extensions remain in position to form part of the overall roof structure and may serve to carry tile battens in the structure. This concept is shown schematically in Figures 8, 9 and 9A. In Figure 8 which shows the truss assembly in exploded form, the rafter extensions are shown in the dashed lines 30, with the hinge connection to the top chord of the associated supplementary trusses being shown at 32. Figure 9A shows the extensions 30 having been folded out to their extended configuration after erection of the truss assembly, and being connected to the top chord of the next adjacent main truss 34; Figure 9 shows the extensions 30 at the commencement of folding them out.

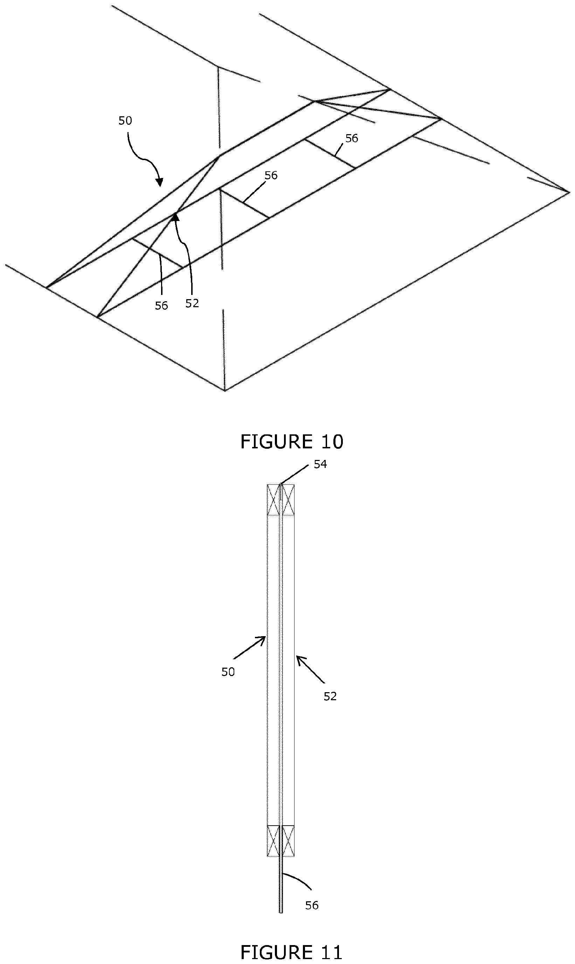

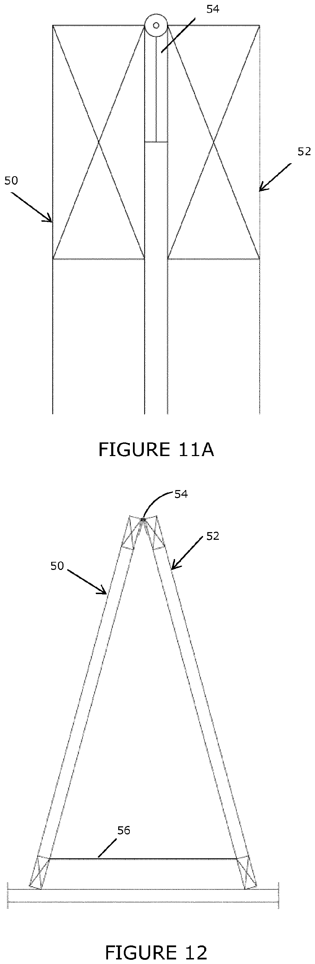

Figures 10 to 12 show schematically components for forming a braced structure of part of a roof hip end and to which further trusses or other structure can be subsequently attached without the need for any additional temporary bracing. The structure comprises two truncated trusses 50, 52 hinged together at their top chord preferably by two or more hinges 54 spaced along the top chord whereby the two trusses are pivotal about a horizontal axis adjacent the top chords between a folded configuration in which the trusses are in side-by-side relation (see Figures 11 and 11A) for transportation to site and craning into position on site and an erected configuration in which the two trusses are spread apart at their bottom chords and are thereby mutually inclined (see Figures 10 and 12). The bottom chords of the two trusses are interconnected by two or more pre-installed links 56 spaced along the bottom chords of the two trusses and which, in the erected configuration form rigid struts to provide rigid bracing between the bottom chords of the two trusses whereby in the erected or deployed configuration the assembly of the two trusses is inherently stable and can be placed in that condition on the top plate of the underlying structure. The structure as shown has three such links 56 but it will be understood that the number of required links will be dependent on the overall length of the two trusses.

Although the links 56 have only been illustrated schematically in the drawings, their structure is such that they must permit the trusses to lie in their folded configuration for transportation and craning and then permit the trusses to be swung into their erected configuration in which they then form rigid struts between the two bottom chords. A form of link which can achieve that consists of two arms hinged together at one end and each hinged at an outer end to respective one of the two bottom chords whereby in a folded configuration the two arms are lying in approximately parallel relation or are inclined by a small angle whereas in the erected configuration the two arms are substantially longitudinally aligned to constitute a bracing strut. Rigidity of the strut thus formed can be achieved in a number of different ways. One way of achieving this is to configure the hinged connection between the two arms in such a manner that as the trusses reach their fully erected configuration, the arms move slightly beyond a position in which they are longitudinally aligned into a locked over-centre position in which the arms provide a rigid lock against movement of the two bottom chords one towards the other. An alternative way of achieving the required rigidity is to provide a screw-operated lock or clamp between the inner ends of the two arms when the erected configuration is reached.

When the assembly consisting of the two rigidly braced deployed trusses is positioned on the top plate of the underlying structure and attached thereto and inherently stable as a consequence of its configuration, further trusses can be applied working from that stable assembly.

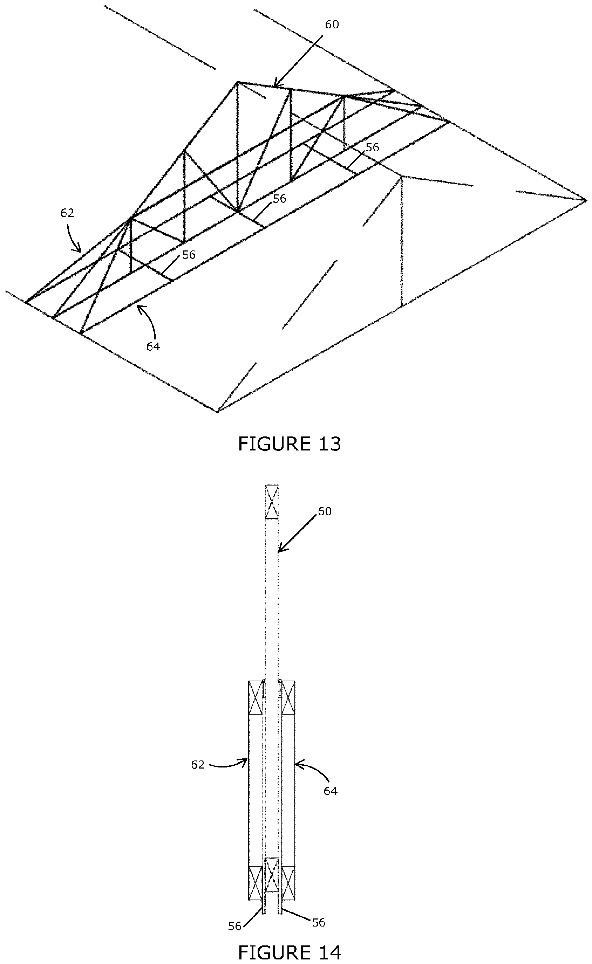

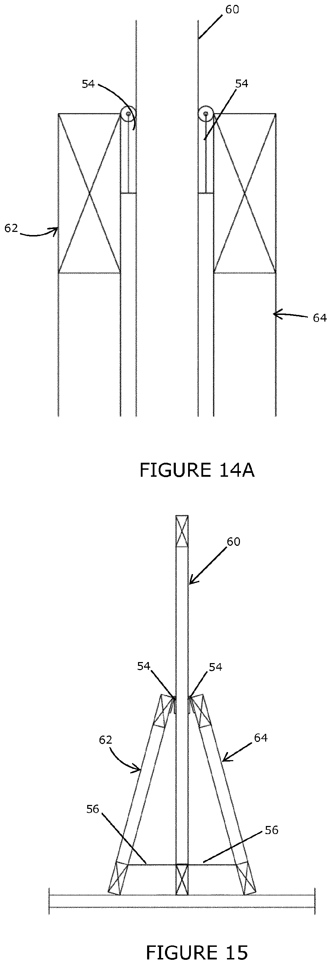

Figures 13 to 15 relate to a similar concept to that of Figures 10 to 12 but applied to structure for forming a gable end consisting of a central gable truss 60 and two truncated trusses 62, 64 on opposite sides of the central truss 60 and each connected by hinges 54 to an intermediate chord of the central truss for movement about a horizontal axis adjacent the intermediate chord between a folded configuration for transportation and craning into position in which the three trusses lay side-by-side (see Figures 14 and 14A) to an erected configuration in which the truncated trusses are pivoted outwardly into a stable condition inclined to the central truss (see Figures 13 and 15) and rigidly braced in that condition by struts extending between the bottom chord of each of the truncated trusses and the bottom chord of the central truss. The struts are formed by links 56 of the form described with reference to Figures 10 to 12.

## Claims

1. A truss assembly for use in building construction, comprising a main truss (2) lying in a vertical plane in its installed position and one or more supplementary trusses (4) attached to the main truss to extend transversely to a face of the main truss upon erection of the truss assembly, wherein the or each supplementary truss is hingedly connected to the main truss for swinging movement about a substantially vertical axis between a folded configuration in which the supplementary truss lies adjacent the face of the main truss and an erected configuration in which the supplementary truss extends transversely to said face, **characterized in that** one or more of the supplementary trusses includes a rafter extension (30) hinged to a top chord of the supplementary truss and lying along said top chord during installation of the truss assembly, the hinged connection to the top chord being such that after installation, the rafter extension can be swung outwardly to extend beyond the main truss and form bracing for an adjacent main truss during its subsequent installation.

2. A truss assembly according to claim 1 wherein the assembly comprises two or more supplementary trusses (4) spaced lengthwise along the main truss (2).

3. A truss assembly according to claim 1 or 2 wherein the main truss (2) forms a component and the or each supplementary truss (4) forms a second component of the truss assembly, said components being fastened to each other and to an underlying top plate by a plurality of fastenings, wherein each fastening comprises a first part for attachment to one of the components and a second part for attachment to the other of the component, the first and second parts each being of plate-like form, the first part providing a multiplicity of locking projections and the second part providing a multiplicity of apertures arranged in a configuration equivalent to that of the locking projections of the first part such that when the two parts are applied together in face-to-face relation the locking projections of the first part can extend through the apertures of the second part and lock to the second part to thereby lock the two parts together against separation of the two parts, and wherein in each of the positions where a bottom chord of the main truss and the or each supplementary truss adjoins the top plate, one part of the fastening is affixed to the bottom chord, with the other part of the fastening being fixed at that position to the top plate, the respective parts of the fastenings being applied prior to installation of the truss assembly.

4. A truss assembly according to claim 3, wherein each locking projection of the first part includes a locking tang (22) capable of resilient inwards deflection to enable the projection with tang to move through the aperture upon engagement of the two parts, with the tang then deflecting outwardly when it has moved through the aperture to engage against the opposite face of the second part adjacent the aperture.

5. A truss assembly according to claim 3, wherein at least one edge of each aperture of the second part includes a locking tang (22) capable of resilient outwards deflection to enable the locking projection to move through the aperture upon engagement of the two parts, with the tang then deflecting inwardly to lock the projection against withdrawal from the aperture.

6. A truss assembly according to any one of claims 3 to 5, wherein the second part is shaped to form a series of parallel crests of arcuate form with each crest being formed with a series of parallel slots (18) spaced along its length, the slots constituting said apertures, and the first part is shaped to form a series of parallel crests, each crest being defined by a series of spaced parallel ribs (20), each of the ribs being of a size to fit within one of the slots of the second part whereby each rib constitutes a said locking projection.

7. A truss assembly according to any one of claims 3 to 6, wherein one part of the fastening is attached to a face of the main truss and the other part of the fastening is attached to a chord of a further truss to be coupled to the main truss after installation of the truss assembly.

## Patentansprüche

1. Trägeranordnung zur Verwendung im Gebäudebau, die einen Hauptträger (2), der in seiner Einbaulage in einer senkrechten Ebene liegt, und einen oder mehrere zusätzliche Träger (4) umfasst, die so am Hauptträger angebracht sind, dass sie nach dem Aufsetzen der Trägeranordnung quer zu einer Fläche des Hauptträgers verlaufen, wobei der oder jeder zusätzliche Träger angelenkt mit dem Hauptträger verbunden ist, zwecks einer Schwenkbewegung um eine im Wesentlichen senkrechte Achse zwischen einer umgeklappten Gestaltung, in der der zusätzliche Träger angrenzend an die Fläche des Hauptträgers liegt, und einer Aufsetzgestaltung, in der der zusätzliche Träger quer zu der Fläche verläuft, **dadurch gekennzeichnet, dass** ein oder mehrere der zusätzlichen Träger eine Sparrenverlängerung (30) aufweist, die an einem Obergurt des zusätzlichen Trägers angelenkt ist und während der Anbringung der Trägeranordnung an dem Obergurt entlang liegt, wobei die Gelenkverbindung an dem Obergurt derart ist, dass die Sparrenverlängerung nach der Anbringung nach außen geschwenkt werden kann und sich so über den Hauptträger hinaus erstreckt und eine Aussteifung für einen benachbarten Hauptträger während seiner anschließenden Anbringung bildet.

2. Trägeranordnung nach Anspruch 1, wobei die Anordnung zwei oder mehr zusätzliche Träger (4) umfasst, die der Länge nach den Hauptträger (2) entlang beabstandet sind.

3. Trägeranordnung nach Anspruch 1 oder 2, wobei der Hauptträger (2) eine Komponente bildet und der oder jeder zusätzliche Träger (4) eine zweite Komponente der Trägeranordnung bildet, wobei die Komponenten aneinander und an einer darunterliegenden oberen Platte über mehrere Sicherungsvorrichtungen befestigt sind, wobei jede Sicherungsvorrichtung einen ersten Teil zur Befestigung an einer der Komponenten und einen zweiten Teil zur Befestigung an der anderen Komponente umfasst, wobei der erste und zweite Teil jeweils plattenartig geformt sind, wobei der erste Teil eine Vielzahl von Arretieransätzen vorsieht und der zweite Teil eine Vielzahl von Öffnungen vorsieht, die in einer Gestaltung angeordnet sind, die der der Arretieransätze des ersten Teils entspricht, sodass die Arretieransätze des ersten Teils, wenn die beiden Teile gemeinsam einander gegenüber verwendet werden, durch die Öffnungen des zweiten Teils verlaufen können und an dem zweiten Teil arretiert werden können, um dadurch die beiden Teile gegen eine Trennung der beiden Teile aneinander zu arretieren, und wobei in jeder der Positionen, in denen ein Untergurt des Hauptträgers und des oder jedes zusätzlichen Trägers an die obere Platte angrenzt, ein Teil der Sicherungsvorrichtung an dem Untergurt fixiert ist, wobei der andere Teil der Sicherungsvorrichtung an dieser Position an der oberen Platte befestigt ist, wobei die jeweiligen Teile der Sicherungsvorrichtungen vor der Anbringung der Trägeranordnung angesetzt werden.

4. Trägeranordnung nach Anspruch 3, wobei jeder Arretieransatz des ersten Teils einen Arretierzapfen (22) aufweist, der elastisch einwärts biegbar ist, damit sich der Ansatz mit Zapfen beim Ineinandergreifen der beiden Teile durch die Öffnung bewegt, wobei sich der Zapfen dann nach außen biegt, wenn er sich durch die Öffnung bewegt hat und an der gegenüberliegenden Fläche des zweiten Teils angrenzend an die Öffnung anliegt.

5. Trägeranordnung nach Anspruch 3, wobei mindestens ein Rand jeder Öffnung des zweiten Teils einen Arretierzapfen (22) aufweist, der elastisch auswärts biegbar ist, damit sich der Arretieransatz beim Ineinandergreifen der beiden Teile durch die Öffnung bewegen lässt, wobei sich der Zapfen dann nach innen biegt und so den Ansatz arretiert, damit er nicht aus der Öffnung gezogen wird.

6. Trägeranordnung nach einem der Ansprüche 3 bis 5, wobei der zweite Teil so geformt ist, dass er eine Reihe paralleler bogenförmiger Erhebungen bildet, wobei jede Erhebung mit einer Reihe paralleler Schlitze (18) versehen ist, die ihre Länge entlang beabstandet sind, wobei die Schlitze die Öffnungen darstellen und der erste Teil so geformt ist, dass er eine Reihe paralleler Erhebungen bildet, wobei jede Erhebung durch eine Reihe von beabstandeten parallelen Rippen (20) definiert ist, wobei jede der Rippen eine derartige Größe aufweist, dass sie in einen der Schlitze des zweiten Teils passt, wodurch jede Rippe einen derartigen Arretieransatz darstellt.

7. Trägeranordnung nach einem der Ansprüche 3 bis 6, wobei ein Teil der Sicherungsvorrichtung an einer Fläche des Hauptträgers angebracht ist und der andere Teil der Sicherungsvorrichtung an einem Gurt eines weiteren Trägers befestigt ist, der nach der Anbringung der Trägeranordnung mit dem Hauptträger verbunden werden soll.

## Revendications

1. Ensemble de treillis destiné à être utilisé dans la construction de bâtiments, comprenant un treillis principal (2) situé dans un plan vertical dans sa position installée et au moins un treillis supplémentaire (4) fixé au treillis principal pour s'étendre transversalement à une face du treillis principal lors de l'érection de l'ensemble de treillis, le ou chaque treillis supplémentaire étant relié de manière articulée au treillis principal pour un mouvement de balancement autour d'un axe sensiblement vertical entre une configuration pliée dans laquelle le treillis supplémentaire est adjacent à la face du treillis principal et une configuration érigée dans laquelle le treillis supplémentaire s'étend transversalement à ladite face, **caractérisé en ce que** l'au moins un treillis supplémentaire comprend une extension de chevrons (30) articulée sur une membrure supérieure du treillis supplémentaire et située le long de ladite membrure supérieure pendant l'installation de l'ensemble de treillis, la liaison articulée à la membrure supérieure étant telle qu'après l'installation, l'extension de chevrons peut être balancée vers l'extérieur pour s'étendre au-delà du treillis principal et former un contreventement pour un treillis principal adjacent pendant son installation ultérieure.

2. Ensemble de treillis selon la revendication 1, l'ensemble comprenant au moins deux treillis supplémentaires (4) espacés dans le sens de la longueur le long du treillis principal (2).

3. Ensemble de treillis selon la revendication 1 ou 2, le treillis principal (2) formant un élément et le ou chaque treillis supplémentaire (4) formant un second élément de l'ensemble de treillis, lesdits éléments étant fixés l'un à l'autre et à une plaque supérieure sous-jacente par une pluralité de fixations, chaque fixation comprenant une première partie pour la fixation à l'un des éléments et une seconde partie pour la fixation à l'autre élément, les première et seconde parties ayant chacune une forme de plaque, la première partie fournissant une multiplicité de saillies de verrouillage et la seconde partie fournissant une multiplicité d'ouvertures disposées dans une configuration équivalente à celle des saillies de verrouillage de la première partie de sorte que lorsque les deux parties sont appliquées ensemble en relation face à face, les saillies de verrouillage de la première partie peuvent s'étendre à travers les ouvertures de la seconde partie et se verrouiller à la seconde partie pour ainsi verrouiller les deux parties ensemble contre la séparation des deux parties, et dans chacune des positions où une membrure inférieure du treillis principal et le ou chaque treillis supplémentaire est adjacent à la plaque supérieure, une partie de la fixation étant fixée à la membrure inférieure, l'autre partie de la fixation étant fixée à cette position à la plaque supérieure, les parties respectives des fixations étant appliquées avant l'installation de l'ensemble de treillis.

4. Ensemble de treillis selon la revendication 3, chaque saillie de verrouillage de la première partie comprenant une languette de verrouillage (22) susceptible d'une déviation élastique vers l'intérieur pour permettre à la saillie avec la languette de se déplacer à travers l'ouverture lors de la mise en prise des deux parties, la languette déviant ensuite vers l'extérieur lorsqu'elle s'est déplacée à travers l'ouverture pour venir en prise avec la face opposée de la seconde partie adjacente à l'ouverture.

5. Ensemble de treillis selon la revendication 3, au moins un bord de chaque ouverture de la seconde partie comprenant une languette de verrouillage (22) susceptible d'une déviation élastique vers l'extérieur pour permettre à la saillie de verrouillage de se déplacer à travers l'ouverture lors de la mise en prise des deux parties, la languette déviant ensuite vers l'intérieur pour verrouiller la saillie contre le retrait de l'ouverture.

6. Ensemble de treillis selon l'une quelconque des revendications 3 à 5, la seconde partie ayant une forme pour former une série de crêtes parallèles de forme arquée, chaque crête étant formée avec une série de fentes parallèles (18) espacées sur sa longueur, les fentes constituant lesdites ouvertures, et la première partie ayant une forme pour former une série de crêtes parallèles, chaque crête étant définie par une série de nervures parallèles espacées (20), chacune des nervures étant d'une taille pour s'insérer dans l'une des fentes de la seconde partie, chaque nervure constituant ainsi une saillie de verrouillage.

7. Ensemble de treillis selon l'une quelconque des revendications 3 à 6, une partie de la fixation étant fixée à une face du treillis principal et l'autre partie de la fixation étant fixée à une membrure d'un treillis supplémentaire devant être accouplé au treillis principal après l'installation de l'ensemble de treillis.
